# EUROPÄISCHE PATENTSCHRIFT

(11) **EP 1 096 899 B1**
(45) Veröffentlichungstag und Bekanntmachung des Hinweises auf die Patenterteilung: **17.12.2003**
(21) Anmeldenummer: 99936478.9
(22) Anmeldetag: 05.07.1999
(51) Int. Cl.: A61C 8/00

(54) **FORMTEILE, INSBESONDERE FOLIEN, ZUR FÖRDERUNG DER NEUBILDUNG VON KNOCHENMATERIAL IM KIEFER**
MOULDED PARTS, ESPECIALLY FILMS, FOR PROMOTING THE REGENERATION OF BONE MATERIAL IN THE JAW
PIECES MOULEES, NOTAMMENT PELLICULES, S'UTILISANT POUR FAVORISER LA REGENERATION DE MATERIAU OSSEUX DANS LA MACHOIRE

(30) Priorität: 10.07.1998 DE 19830992; 04.08.1998 DE 19835251
(43) Veröffentlichungstag der Anmeldung: 09.05.2001
(73) Patentinhaber: Binder, Eckhard, 56567 Neuwied (DE)
(72) Erfinder: Binder, Eckhard, 56567 Neuwied (DE)
(74) Vertreter: Popp, Eugen, Dr.
(86) Internationale Anmeldenummer: EP9904657
(87) Internationale Veröffentlichungsnummer: WO00002494

(56) Entgegenhaltungen:
- WO-A-90/07308
- WO-A-92/10218

## Beschreibung

Die Erfindung bezieht sich auf Formteile, insbesondere Folien, zur Förderung der Neubildung von Knochenmaterial im Kiefer. Sie bezieht sich insbesondere auf einen subpereostalen Rahmen für die Knochenneubildung im tierischen und insbesondere menschlichen Kiefer, und hier vor allem im Alveolarkamm.

Bekanntlich taucht häufig das Problem auf, daß Zähne aus dem Kiefer herausoperiert werden müssen und dabei wertvolle Knochensubstanz verloren geht. In den leeren Alveolen, wie sie bei einer Extraktion eines Zahnes entstehen, setzt sich gewöhnlich ein Blutkuchen ab, aus dem sich nach Schrumpfung im Laufe der Zeit Knochenmaterial bildet. Wurden jedoch mehrere nebeneinander befindliche Zähne herausoperiert, hat man bisher die Alveolarkämme durch Einsetzen von nichtresorbierbaren oder resorbierbaren Folien oder Metallnetzen, insbesondere Titannetzen abgeschirmt und diese nach Neubildung der Knochensubstanz in einer zweiten Operation mühsam wieder entfernt. Die resorbierbaren Folien hatten jedoch den Nachteil, daß sie eine unzureichende Formstabilität hatten. Die Verwendung von resorbierbaren Folien hatte andererseits den Vorteil, daß sie keinen zusätzlichen chirurgischen Eingriff erforderte wie es bei den anderen Methoden einschließlich der Transplantation von autologem Knochenmaterial oder bei dem Einsetzen von Knochenersatzmaterial erforderlich ist. Bei diesem bestand außerdem die Gefahr, daß es zu Abstoßungen kam.

Es ist also grundsätzlich bekannt (vgl. DE 4226465 A1), mit Hilfe von Formteilen aus bioabsorbierbaren Polymeren, z.B. Polymilchsäuren, Kiefer(knochan) und Wurzeln, die (operativ) entfernt wurden oder fehlen, wieder herzustellen und Zahnwurzeln zu befestigen. Das Material kann z.B. U-förmig, röhrenähnlich oder hufeisenförmig sein. Die Wiederherstellung des Kieferknochens kann bewerkstelligt werden, indem man das geformte Material gemäß der Form der defekten Stelle des Kieferknochens geeignet schneidet, autogenes teilchenförmiges schwammiges Knochenmaterial und Mark in das reproduzierende Material einfüllt, das reproduzierende Material an einer defekten Stelle in Form eines U oder eines umgekehrten U in dreidimensionaler Konfiguration bedeckt, gefolgt von der Bindung des reproduzierenden Materials mit Fäden an beide Seiten des Knochens an einer defekten Stelle, um das Material zwecks Wiederherstellung des Kieferknochens zu fixieren.

Diese Fixierung erfolgt zwar im allgemeinen mit artfremden Materialien, wie mit Metalldraht oder Schrauben aus Polyethylen, jedoch wird im Beispiel 4 auch beschrieben, anstelle des Metalldrahtes einen Faden aus Poly-L-Milchsäure, also einem bioresorbierbaren Material zu verwenden. Anderer-seits wird erwähnt, die dortige Erfindung umfasse "eine Fixiervorrichtung für künstliche Wurzeln Platten, die auf dem Kieferknochen-Reproduktionsmaterial paßgenau angebracht sind". Die Schreibweise "Wurzeln Platten" bedeutet hier, daß die Fixiervorrichtung aus Platten für künstliche Wurzeln bestehen soll. Wie sich aus der weiteren Offenbarung und den Figuren, speziell 1 und 3, ergibt, wird der Begriff "Platte",hier jedoch für ein Netz bzw. Gewebe bzw. retikuläre Schale verwendet.

In der WO 90/07308 A (= US-A 5 700 479) werden Formteile aus zwei Folien beschrieben, von denen mindestens eine perforiert ist. Sie sollen ferner Abstandshaltevorrichtungen wie Noppen aufweisen, die die beiden Folien in paralleler Lage halten sollen. Das Elemant kann biologisch abbaubar sein, d. i. in vom Körper resorbierbarer Form vorliegen, und die beiden Folien können eine variierbare Steifheit haben. Diese Elemente werden mit dem Zahn fest verbunden.

In der DE 693 085 61 = EP 649 300 wird die Verwendung eines Gemisches von zwei amorphen Polymilch-säuren zur Herstellung einer implantierbaren bioresorbierbaren Membran beschrieben, "die zum Fördern der Regenerierung des Zahnfleisches und/oder der Kieferknochen mit Hilfe der Technik der gesteuerten Geweberegenerierung zur Behandlung von parodontalen Erkrankungen bestimmt sind. Derartige Membranen sind nicht formstabil, wie sich auch aus der Angabe ergibt, daß die Membran den gewünschten Weichheitsgrad bei einer Temperatur von nicht mehr als 37 °C haben soll. Formteile, die als auf dem Kiefer hohlraumbildende, gut fixierbare Folien oder Platten vorliegen und so gestaltet sind, daß eine feste Verbindung mit der Knochenunterlage auf dem Kiefer ermöglicht wird, sind in dieser Entgegenhaltung weder beschrieben noch lassen sie sich daraus herleiten.

In der DE 196 11 285 Al werden Schutzplatten oder -folien beschrieben, die aus biokompatiblem thermoplastischem Kunst-stoff bestehen, wie dem Poly(L-lactid-co-D,L-lactid). Die Schutzplatten sollen zum Erzeugen eines temporären Schutzes dienen, mit der das Transplantat an Ort und Stelle fixiert und dabei gegen das knöcherne Transplantatlager gepreßt werden soll. Der Gegenstand der vorliegenden Erfindung ist aus dieser Entgegenhaltung weder bekannt noch daraus herzuleiten.

In der DE 195 20 867 A1 ist eine Abdeckmembran aus körperkompatiblem Material zum vorübergehenden Abdecken einer mit Knochenaufbaumaterial, insbesondere Hydroxylapatitgranulat, gefüllten Ausnehmung in körpereigenem Knochengewebe beschrieben. Da die Membranen nur eine ungenügende Formstabilität aufweisen, wird der Abdeckmembran eine Retentionsunterstützungseinrichtung zugeordnet, die mindestens eine mechanische Retentionshilfe aufweist. Aus den gleichen Gründen ist auch in der DE 195 43 906 Al vorgesehen, Membranen für die gesteuerte Knochenregeneration mit einem Stützgerüst zu versehen, das nicht in die Membran integriert ist, ausschließlich an der Oberfläche des für die Knochenregeneration vorgehaltenen Raumes verläuft und nach der Knochenneubildung wieder entfernt werden muß. Durch das Stützgerüst wird bewirkt, daß die Membran, der es an Formsteifigkeit fehlt, in der gewünschten Form gehalten wird.

Diese Nachteile werden durch die Erfindung vermieden. Gegenstand der Erfindung sind Formteile, insbesondere versteifte Folien, zur Förderung der Neubildung von Knochenmaterial im Kiefer, die biokompatibel, verformbar, zuschneidbar und im eingesetzten Zustand raumgebend, standfest und vor allem resorbierbar sind. Die Verwendung derartiger Formteile ermöglicht es, in der Zahnmedizin völlig neue therapeutische Wege zu gehen.

Die Erfindung bezieht sich auf Formteile, die geeignet sind, die Neubildung von Knochenmaterial im Kiefer zu ermöglichen bzw. zu fördern, die biokompatibel, unter Druck und/oder Wärme verformbar, unter den Bedingungen im Kiefer- und Zahnbereich für die Dauer der Neubildung von Knochensubstanz standfest und formstabil sind, in vom Körper resorbierbarer Form als auf dem Kiefer hohlraumbildende, gut fixierbare Raumform in Form von Folien oder Platten vorliegen und so gestaltet sind, daß eine feste Verbindung mit der Knochenunterlage auf dem Kiefer ermöglicht wird,
dadurch **gekennzeichnet**, daß sie
a) über eine Vorfalzung in einer für den neuen Kieferkammaufbau geeigneten Weise verfügen oder
b) so gestaltet sind, daß zwei an ihren interdentalen Enden (6, 7) unterschiedlich geformte Folienteile (3, 4) stabil verbindbar sind oder
c) die Form einer apicalen Verbreiterungsfolie haben.

Die Konzeption gemäß der DE 42 26 465 Al ist diametral der der Erfindung entgegengesetzt, wonach die Formteile fest auf der Knochenunterlage befestigt werden sollen. Denn das durch die erfindungsgemäßen Formteile gelöste Problem besteht darin, die Knochenbildung auf dem vorhandenen Alveolarknochen dadurch zu fördern, daß die Formteile an die Form des Raumgebildes, in dem die Knochensubstanz wiedergebildet werden soll, ... angepaßt sind. Diese werden dann je nach Möglich- und Notwendigkeit mit resorbierbaren chirurgischen Schrauben oder Nieten, insbesondere aus dem gleichen Material, fest auf der Knochenunterlage befestigt. So wird es möglich, daß Alveolarkämme auch nach lang zurückliegenden Extraktionen oder Traumen wieder aufgebaut werden.

Die Formstabilität der erfindungsgemäßen Formteile bewirkt weiter, daß die bei der Zahnextraktion entstehende Wunde stabil von der Einwirkung mechanischer Kräfte abgeschirmt wird, so daß sich der Blutkuchen unter dem Schutz des Formteils, z. B. des Rahmens bzw. Kastens zum Knochen umorganisieren kann. Eine solche Konzeption und solche Möglichkeiten sind der DE 42 26 465 Al nicht zu entnehmen. Die Tatsache, daß nach dem Beispiel 1 neues Knochenmaterial in der Region zwischen dem Zahn und dem Knochen an den Stellen gebildet wird, an denen ursprünglich das Element angeordnet war, bedeutet einen anderen Sachverhalt als die Bildung von Knochenmaterial auf atrophiertem Alveolarknochen oder zusätzlich sich bildender Alveolarknochen zur Verbreiterung einer apicalen Basis.

Als Materialien für die Formteile kommen solche in Betracht, die die vorgenannten Eigenschaften und außerdem eine hinreichende Formstabilität haben, d.h. eine raumgebende Stützfunktion ausüben, bevor das Material resorbiert wird. Diese Formstabilität sollte zur Behandlung großer Defekte im allgemeinen drei bis sechs Monate, vorzugsweise mindestens vier oder gar fünf Monate gewahrt sein. Andererseits kann es auch ausreichend sein, für die Behandlung von kleinen Extraktionsalveolen Produkte zu verwenden, deren Formstabilität für eine kürzere Zeit, z.B. zwei bis sechs Wochen erhalten bleibt.

Resorbierbare, für die Erfindung geeignete Stoffe sind beispielsweise das Polydioxanon oder selbstverstärktes Polyglykolid und insbesondere das Polylactid der Formel (C₃H₄O₂)ₙ. Von diesen ist ganz besonders bevorzugt das Copolymere Poly(L-lactid-co-D,L-lactid) im Molverhältnis L-Lactid zu D,L-Lactid von 6.7:33 bis 73:27, und hiervon wiederum das handelsübliche Poly(L-lactid-co-D,L-lactid) 70:30, das unter der Markenbezeichnung Resomer LR 708 von der Firma Boehringer Ingelheim erhältlich ist. Während reines Poly(L-lactid) eine sehr lange Abbauzeit bis hin zu fünf und mehr Jahren für die vollständige Resorption hat, wird durch die Copolymerisation von L-Lactid und D,L-Lactid eine Verkürzung der vollständigen Abbauzeit auf etwa drei Jahre erreicht, ohne daß die mechanischen Eigenschaften im Vergleich zum reinen Poly(L-lactid) beeinträchtigt werden.

Das Molekulargewicht, und damit die Abbauzeit und Formstabilität, d.h. der Erhalt der raumgebenden Stützfunktion der erfindungsgemäß verwendeten Materialien und insbesondere des Polylactids kann in weiten Bereichen durch Modifizierung schwanken. Wichtig ist die Tatsache, daß sich die Materialien im Körper zu CO₂ und H₂O metabolisieren, also bioverträglich, nicht toxisch sind und auch nicht zu Abwehrreaktionen des Gewebes führen. Je niedriger das Molekulargewicht ist, desto schneller wird die Substanz resorbiert und desto kürzere Zeit ist die Formstabilität gewahrt. Beispielsweise hat das vorgenannte Lactid 70:30 je nach Vorbehandlung ein Molgewicht von ca. 160.000 bis 600.000.

Das Polylactid liegt bevorzugt in einer amorphen Form vor, die frei oder praktisch frei von kristallinen Anteilen ist. Die vollständig amorphen Formen sind für die praktische Anwendung am besten geeignet.

Die Verwendung der vorgenannten Stoffe - das Resomer LR 708 ist z.B. als weißes oder nahezu weißes Granulat im Handel - zur Herstellung von Formteilen, z.B. durch Spritzguß, ermöglicht in der Zahnmedizin völlig neue therapeutische Wege. Da die Materialien bei maßig über der Körpertemperatur liegenden Temperaturen, z.B. oberhalb 45°C oder 50°C bzw. 55°C geformt werden können, können die Formteile an die Form des Raumgebildes, in dem die Knochensubstanz wiedergebildet werden soll, leicht angepaßt werden. Bevorzugt haben die Formteile die Form von Folien oder Platten, die unperforiert oder für den besseren Stofftransport zur Ernährung des neuen Gewebes perforiert hergestellt werden. Diese können zu dreidimensional raumgebenden, durch Noppen, Blocks oder Rippen unterstützte Formteile mit der Noppenseite zum Knochen subperiostal eingebracht und je nach Möglich- und Notwendigkeit mit resorbierbaren chirurgischen Schrauben oder Nieten, insbesondere aus dem gleichen Material, fest auf der Knochenunterlage befestigt werden. Es wird so möglich, daß Alveolarkämme auch nach lang zurückliegenden Extraktionen oder Traumen wieder aufgebaut werden, um eine statisch und ästhetisch bessere prothetische Versorgung zu bewirken. So können speziell für Implantatversorgungen im Ober- wie im Unterkiefer bessere Vorraussetzungen geschaffen werden.

Eine besonders geeignete Ausführungsform hierfür sind sogenannte Platzhalterformkörper (bone space frames).

Die Wirkungsweise läßt sich an frischen Wunden gut erläutern. Dort bildet sich zunächst ein Blutkuchen. Da die Wunde durch die erfindungsgemäßen Formteile stabil von der Einwirkung mechanischer Kräfte abgeschirmt wird, kann sich dieser Blutkuchen unter dem Schutz des Rahmens bzw. Kastens aus dem erfindungsgemäß verwendeten Material zum Knochen umorganisieren. Wenn dieser Vorgang beendet ist, was auch von der Natur des Patienten abhängt, kann das erfindungsgemäße Formteil ohne Schaden seine Stützfunktion verlieren und resorbiert werden.

Für die Anwendung ist auch eine zweiteilige, vorgeformte, ineinander stabil einrastende Anwendungsform für vertikale, horizontale und kombinierte Parodontaldefekte ideal. Diese kann vestibulär und lingual in der zuvor angegebenen Weise auf der interradikulären Knochenbasis befestigt werden. Wenn sie approximal einrastend zusammengeschoben ist, bildet sie eine stabile interdentale Unterlage für den durch Nähte versorgten Verschiebelappen und dient gleichzeitig als Raumgeber für Knochenneubildung im parodontalen Bereich. Darüber hinaus wird durch die zweiteilige Anwendungsform das mühsame interdentale Durchfädeln erspart.

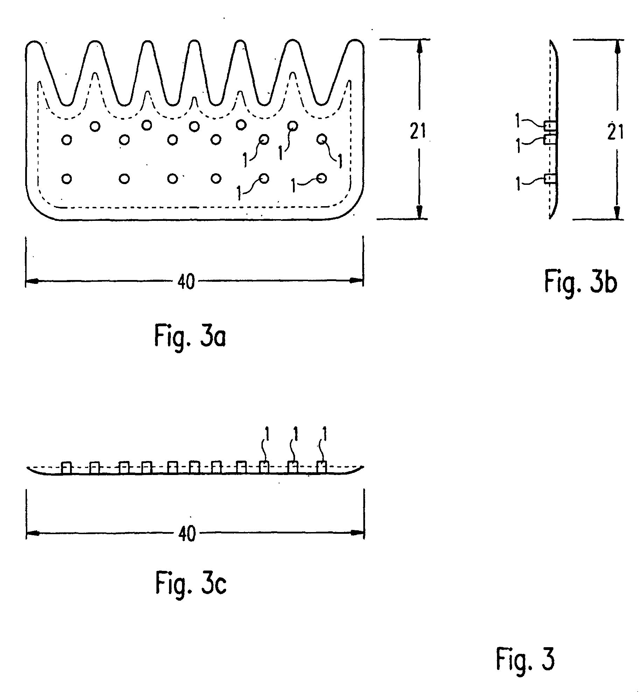

Wie in Fig. 3 gezeigt ist, kann zur Verbreiterung der apicalen Basis eine nach zervikal girlandenförmig auslaufende Form vestibulär subperiostal eingesetzt werden, deren Halbradien individuell, d.h. je nach Anwendungsgebiet, für Frontzähne, Prämolaren oder Molaren geformt sind. Die von der Unterseite z.B. bis 2 mm hohen Abstandsnoppen oder Rippen können individuell gekürzt werden und sollten vom Abstand her auf die jeweilige interradikuläre Situation abgestimmt sein, um neben der prophylaktischen Anwendung besonders dem Kieferorthopäden eine sichere Therapie zu erlauben. Die vorgeformten Papillengirlanden können auf einem sterilen Modell individuell praeoperativ angepaßt werden und ermöglichen hierdurch eine schnelle operative Versorgung. Für das operative Vorgehen wird vorgeschlagen, nach einem senkrechten, interradikulären Schleimhautschnitt zwischen Eckzahn und erstem Prämolar das Periost in der erforderlichen Breite zu lösen und nach vorsichtiger horizontaler Untertunnelung die jeweiligen Formkörper horizontal einzuschieben und an den Enden mit oben angegebenen Schrauben auf der Knochenunterlage zu fixieren.

Nach einer besonderen Ausführungsform können die vorgenannten Formteile auch noch als Medikamententräger dienen, d.h. also, daß in die Formteile Medikamente mit Langzeitwirkung eingebaut werden. Hierfür kommen vor allem antiinfektionöse Medikamente, insbesondere keimabtötende (antibiotische) Substanzen wie Antibiotika, und das Knochenwachstum fördernde bzw. knochenstabilisierende induktive Proteine in Betracht. Beispielsweise kann man im Parodontoseteil, einer zweiteiligen Folie, Antibiotika und Antiinfektiva wie das Chemotherapeutikum Metronidazol, Ornidazol, Amoxicilin, Penicilline oder Tetracycline einbringen, die über längere Zeit, z.B. bis zu 6 Monaten oder mehr, in einer Langzeitanwendung wirken, ähnlich wie es mit den bekanntn Tetracyclinfäden (mit Tetracyclin versehenen Kunststoffäden) geschieht, die in Zahnfleischtaschen eingelegt werden.

Andere für eine erfindungsgemäße Langzeitverabreichung in der Zahnmedizin geeignete Stoffe sind z.B. physiologisch und pharmazeutisch verträgliche Fluorverbindungen wie Fluoride.

Die Erfindung wird durch die beigefügten Abbildungen weiter erläutert. Darin bedeuten die Maßangaben mm.

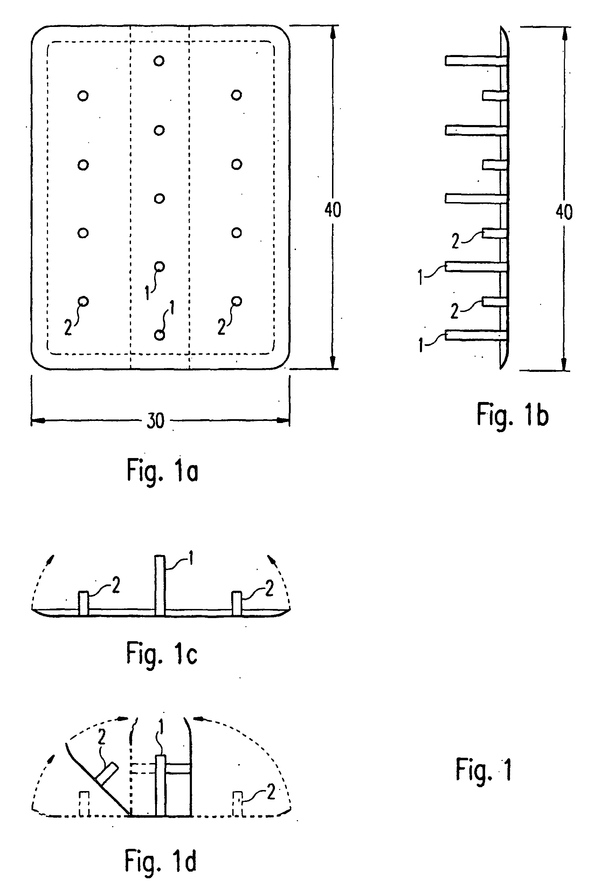

In der Fig. 1 wird eine universell anwendbare Folie in den Maßen 30 x 40 mm dargestellt, und zwar in Fig. 1a in der Aufsicht, in der Fig. 1b in der Seitenansicht der Längsseite, in der Fig. 1c in der Schmalseitenansicht und in der Fig. 1d in einer Weise, wie sie für einen neuen Kieferkammaufbau geeignet ist. 1 und 2 stellen darin nicht maßstäblich wiedergegebene Noppen dar, deren Anordnung, Dicke, Länge und Anzahl variabel ist. Dabei bezeichnen 1 die vertikal und 2 die etwas kürzeren horizontal abstützenden Noppen. In der Figur 1d wird gezeigt, daß das rechte Teil bereits hochgekippt ist, was auch durch die ununterbrochene gestrichelte Linie angedeutet wird, während das linke Teil sich noch in einem Winkel von 45° befindet. Dabei wird das Abknicken durch eine Vorfalzung der Folie erleichtert. Die hier gezeigte Anordnung und die Maße sind nur beispielhaft. Naturgemäß ist auch die Form der Folie von den örtlichen Verhältnissen im Kiefer abhängig; so kann die Folie rund, oval sein oder jede andere erforderliche Form aufweisen. Speziell in der Fig. 1a ist eine 7 mm breite Alveolarkammoberfläche eingezeichnet. Die daneben befindlichen Seitenteile werden dann an die Außen- und Innenseite, also an die vestibuläre und linguale Knochenfläche angelegt und mittels Schrauben oder Stiften aus dem gleichen Material wie das Formteil fixiert.

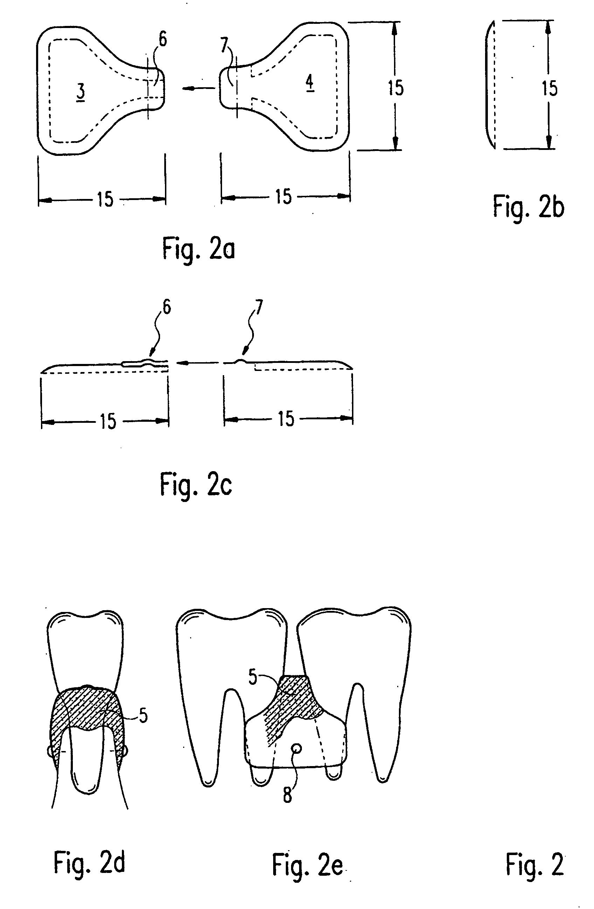

Fig. 2 zeigt die zweiteilige Anwendungsform für Parodontaldefekte. Fig. 2a zeigt die beiden Folienteile 3 und 4 mit einer Länge von etwa 15 mm in einer in der Praxis üblichen Größe. Fig. 2b und 2c stellen die Seitenansichten dar. Die Fig. 2d und 2e zeigen eine Anwendungsmöglichkeit dieser Folie, wobei der schraffierte Teil 5 den ursprünglich fehlenden und aufzubauenden Knochenteil zeigt.

Die beiden Folienteile sind an ihren interdentalen Enden 6 und 7 unterschiedlich geformt, wodurch sie stabil verbunden und ineinander hineingeschoben werden und für den behandelnden Arzt einfach zu handhaben sind (s. Figuren 2a und 2c). Die feste Fixierung erfolgt an Punkt 8 in Figur 2e und ist sowohl vestibulär als auch oral notwendig.

Fig. 3 gibt eine Ansicht einer apicalen Verbreiterungsfolie für eine Unterkieferfront wieder, wobei Figur 3a eine Aufsicht und die Fig. 3b die Seitenansicht der Längsseite und Fig. 3c der Querseite darstellen. Die Noppen 1 können wieder der Zahl und der Lage nach sowie bezüglich der Dicke variiert werden, wobei sie horizontal gegen die Unterlage abstützen. Daraus ist die spezielle Vorformung des jeweiligen individuellen Gingivaverlaufs entsprechend dem Front- oder Seitenzahngebiet zur Verbreiterung der apicalen Basis ersichtlich.

## Patentansprüche

1. Formteile zur Förderung der Neubildung von Knochenmaterial im Kiefer, die biokompatibel, unter Druck und/oder Wärme verformbar, unter den Bedingungen im Kiefer- und Zahnbereich für die Dauer der Neubildung von Knochensubstanz standfest und formstabil sind, in vom Körper resorbierbarer Form als auf dem Kiefer hohlraumbildende, gut fixierbare Raumform in Form von Folien oder Platten vorliegen und so gestaltet sind, daß eine feste Verbindung mit der Knochenunterlage auf dem Kiefer ermöglicht wird,
**dadurch gekennzeichnet,**
**daß** sie
a) über eine Vorfalzung in einer für den neuen Kieferkammaufbau geeigneten Weise verfügen oder
b) so gestaltet sind, daß zwei an ihren interdentalen Enden (6, 7) unterschiedlich geformte Folienteile (3, 4) stabil verbindbar sind oder
c) die Form einer apicalen Verbreiterungsfolie haben.

2. Formteile nach Anspruch 1,
**dadurch gekennzeichnet ,**
**daß** sie mit Noppen (1, 2), Blocks oder Rippen versehen sind, die individuell gegen die Unterlage abstützen.

3. Formteile nach Anspruch 1 oder 2,
**dadurch gekennzeichnet,**
**daß** die resorbierbare Substanz oberhalb der Körpertemperatur, zweckmäßig über 45°C, insbesondere oberhalb 50°C oder 55°C verformbar ist.

4. Formteile nach einem oder mehreren der Ansprüche 1 bis 3,
**dadurch gekennzeichnet,**
**daß** sie aus Materialien bestehen, die im Körper vollständig zu CO₂ und H₂O abgebaut werden.

5. Formteile nach einem oder mehreren der Ansprüche 1 bis 4,
**dadurch gekennzeichnet,**
**daß** das zugrundeliegende Material unter den Bedingungen im Kiefer- und Zahnbereich eine Formstabilität von wenigstens zwei Wochen, insbesondere drei bis sechs Monaten aufweist.

6. Formteile nach einem oder mehreren der Ansprüche 1 bis 5,
**dadurch gekennzeichnet,**
**daß** sie aus einem Poly(L-lactid-co-D,L-lactid) im Molverhältnis L-Lactid zu D,L-Lactid von 67:33 bis 73:27, insbesondere von etwa 70:30 vorliegen.

7. Formteile nach Anspruch 6,
**dadurch gekennzeichnet,**
**daß** das Polylactid in amorpher Form vorliegt.

8. Formteile nach einem oder mehreren der Ansprüche 1 bis 7,
**dadurch gekennzeichnet,**
**daß** sie noch zusätzlich für die Zahnmedizin geeignete Medikamente mit Langzeitwirkung enthalten, wie antiinfektionöse Medikamente, insbesondere Metronidazol oder Antibiotika wie Ornidazol, Amoxicilin, Penicilline oder Tetracycline.

9. Formteile nach einem oder mehreren der Ansprüche 1 bis 8,
**dadurch gekennzeichnet,**
**daß** sie das Knochenwachstum fördernde bzw. knochenstabilisierende Proteine enthalten.

## Claims

1. Shaped parts for stimulating the regeneration of bone material in the jaw, which are biocompatible, deformable under pressure and/or heat, static and dimensionally stable under conditions in the jaw and tooth regions during the regeneration of bone substance, are present in a form resorbable by the body as a three-dimensional shape forming hollow spaces on the jaw and being well fixable, in the form of sheets or plates, and are configured in such a manner that a fixed connection with the bone basis on the jaw is enabled,
**characterized in that**
a) they are provided with a pre-folding in a manner suitable for building up the new jaw ridge, or
b) are configured in such a manner that two sheet parts (3, 4) differently shaped at their interdental ends (6, 7) may be stably connected, or
c) have the shape of an apical widening sheet.

2. Shaped parts according to claim 1,
**characterized in that**
they are provided with knobs (1, 2), blocks or ribs that individually support against the basis.

3. Shaped parts according to claim 1 or 2,
**characterized in that**
the resorbable substance is deformable above body temperature, appropriately above 45°C, in particular above 50°C or 55°C.

4. Shaped parts according to one or several of claims 1 through 3,
**characterized in that**
they are comprised of materials that, in the body, are entirely degraded to CO₂ and H₂O.

5. Shaped parts according to one or several of claims 1 through 4,
**characterized in that**
the basic material, under conditions in the jaw and tooth areas, has a dimensional stability of at least two weeks, in particular of three to six months.

6. Shaped parts according to one or several of claims 1 through 5,
**characterized in that**
they are present as a poly(L-lactide-co-D,L-lactide) in a molar ratio of L-lactide to D,L-lactide of 67:33 up to 73:27, in particular of about 70:30.

7. Shaped parts according to claim 6,
**characterized in that**
the polylactide is present in an amorphous form.

8. Shaped parts according to one or several of claims 1 through 7,
**characterized in that**
they, in addition, contain medicinal drugs with long-term effect and suitable for dentistry, such as anti-infection drugs, in particular Metronidazole or antibiotics such as Ornidazole, Amoxiciline, Penicilline or Tetracycline.

9. Shaped parts according to one or several of claims 1 through 8,
**characterized in that**
they contain proteins stimulating bone growth or stabilizing bones.

## Revendications

1. Pièces mises en forme pour favoriser la régénération de matériau osseux du maxillaire qui sont biocompatibles, déformables par la pression et/ou par la chaleur, inamovibles et de forme stable dans les conditions régnant dans la zone du maxillaire et des dents pendant la durée de la régénération de substance osseuse, sous forme résorbable par le corps et formant des espaces creux sur le maxillaire, de forme tridimensionnelle pouvant bien se fixer se présentant sous forme de films ou de plaques et constituées de manière telle qu'une fixation inamovible avec le support osseux sur le maxillaire devient possible,
**caractérisées en ce qu'elles**
a) disposent d'un avant-plis d'une manière adaptée à la reconstruction de la nouvelle crête alvéolaire ou
b) sont constituées de manière telle que deux pièces de film (3, 4) formées différemment en leurs extrémités interdentales (6, 7) peuvent être reliées de façon stable ou
c) ont la forme d'un film d'élargissement apical.

2. Pièces mises en forme selon la revendication 1,
**caractérisées en ce que**
elles sont pourvues de boutons (1, 2), de blocs ou de nervures qui s'appuient individuellement sur le support.

3. Pièces mises en forme selon la revendication 1 ou 2,
**caractérisées en ce que**
la substance résorbable est déformable au-dessus de la température du corps, de façon adaptée au-dessus de 45 ° C, en particulier au-dessus de 50 ° C ou 55 ° C.

4. Pièces mises en forme selon l'une ou plusieurs des revendications 1 à 3,
**caractérisées en ce que**
elles se constituent de matériaux qui sont décomposés dans le corps totalement en CO₂ et H₂O.

5. Pièces mises en forme selon l'une ou plusieurs des revendications 1 à 4,
**caractérisées en ce que**
le matériau à la base présente, dans les conditions régnant dans la zone du maxillaire et des dents, une stabilité de forme d'au moins deux semaines, en particulier de trois à six mois.

6. Pièces mises en forme selon l'une ou plusieurs des revendications 1 à 5,
**caractérisées en ce que**
elles se présentent en un poly (L-lactide-co-D,L-lactide) en rapport molaire L-lactide à D,L-lactide de 67 : 33 jusqu'à 73 : 27, en particulier d'environs 70 : 30.

7. Pièces mises en forme selon la revendication 6,
**caractérisées en ce que**
le polylactide se présente sous forme amorphe.

8. Pièces mises en forme selon l'une ou plusieurs des revendications 1 à 7,
**caractérisées en ce que**
elles contiennent, en outre, en plus, des médicaments agissant sur une longue durée, adaptés à la médecine dentaire, tels des médicaments anti-infectieux, en particulier du métronidazole ou des antibiotiques tels de l'ornidazole, de l'amoxiline, de la pénicilline ou de la tétracycline.

9. Pièces mises en forme selon l'une ou plusieurs des revendications 1 à 8,
**caractérisées en ce que**
elles contiennent des protéines favorisant la croissance des os ou la stabilisation des os.
